# EUROPEAN PATENT SPECIFICATION

(11) **EP 1 759 129 B1**
(45) Date of publication and mention of the grant of the patent: **13.02.2008**
(21) Application number: 05762375.3
(22) Date of filing: 22.06.2005
(51) Int. Cl.: F16H 25/20

(54) **LINEAR ACTUATOR ASSEMBLY WITH TORQUE MULTIPLIER**
LINEARANTRIEBSANORDNUNG MIT DREHMOMENTVERVIELFACHER
ENSEMBLE ACTIONNEUR LINEAIRE A MULTIPLICATEUR DE COUPLE

(30) Priority: 23.06.2004 US 582227 P; 29.07.2004 US 592096 P
(43) Date of publication of application: 07.03.2007
(73) Proprietor: Timken US Corporation, Torrington, CT 06790 (US)
(72) Inventor: GIST, Walter, Richard, Jr., Bristol, CT 06010 (US)
(74) Representative: Lehmann, Alexander
(86) International application number: PCT/US2005/022142
(87) International publication number: WO 2006/002277

(56) References cited:
- GB-A- 1 314 062
- GB-A- 2 291 949
- US-A- 5 193 408

## Description

### BACKGROUND

The present invention relates to rotary to linear motion actuators. More particularly, the present invention relates to a linear actuator assembly with an integral torque multiplier.

Numerous types of rotary to linear motion actuators are known and are used in numerous applications. Typical rotary to linear motion actuators include acme screws and ballscrews, among others. US 5 193 408 A described a linear actuator assembly according to the preamble of claim 1 and a method of creating an axial force in a linear actuator according to the preamble of claim 12.

The present invention provides a linear actuator assembly for providing an axial force as defined by the features of claim 1. The assembly includes a linear actuator including first and second rotatable components configured for relative axial movement. A torque input assembly is configured to provide an input torque and an input speed. A torque multiplier assembly engages the torque input assembly and the linear actuator and is configured such that the first and second components are rotated at different speeds, thereby causing relative rotation between the first and second components. The relative rotation causes the first and second components to move axially relative to one another.

A roller ramp drive is an effective way to translate rotating torque to high axial force. By incorporating rollers, the efficiency improves and the driving torque is reduced. However, despite adding rollers to reduce friction, the ramp drive still requires a significant driving torque. It is desired to incorporate a torque multiplying device into the ramp drive.

In the embodiments, the rotary to linear motion actuator is a ramp actuator. The ramp actuator generally comprises at least first and second opposed plates with at least one rolling element positioned therebetween. The rolling element is positioned in a ramp provided on at least one of the plates. The torque input assembly is driven at an input torque and input speed. The torque multiplier transfers the input torque to the ramp actuator with an increased torque from the input torque.

In one embodiment of the invention, an input pinion configured to rotate first and second input gears with an input torque and an input speed is provided. The first input gear has a first series of gear teeth configured to engage and thereby rotate a first ramped plate. The second input gear has a second series of gear teeth configured to engage and thereby rotate a second ramped plate. The first series of gear teeth has a different number of teeth than the second series of teeth such that the first and second ramped plates rotate at different speeds. The relative rotation between the first and second opposed ramped plates causes the at least one rolling element to move between the ramped plates with a resultant axial movement therebetween.

The invention also provides a method of creating an axial force in a linear actuator including first and second rotatable component as defined by the features of claim 12. The method includes providing a single input torque to a torque multiplier assembly coupled with the first and second rotatable components, and rotating the first component at a first speed and rotating the second component at a second speed different from the first speed, thereby causing relative rotation between the first and second components. The relative rotation causes the first and second components to spread apart axially.

Other aspects of the invention will become apparent by consideration of the detailed description and accompanying drawings.

### BRIEF DESCRIPTION OF THE DRAWINGS

Fig. 1 is an isometric view, in partial section, of an illustrative clutch pack assembly incorporating a linear actuator assembly that is a first embodiment of the present invention shown in a first condition.

Fig. 1a is the clutch pack assembly of Fig. 1 with the linear actuator assembly shown in a second condition.

Fig. 2 is an enlarged isometric view showing the linear actuator assembly of Fig. 1.

Fig. 3 is an isometric view of a ramp plate in accordance with the first embodiment of the present invention.

Fig. 4 is a sectional view along the line 4-4 in Fig. 3.

Fig. 5 is an isometric view of a torque input assembly and a torque multiplier assembly of a linear actuator assembly that is a second embodiment of the present invention.

Fig. 6 is an isometric view of a linear actuator assembly that is a third embodiment of the present invention.

Fig. 7 is a sectional view along the line 7-7 in Fig. 6, showing the linear actuator in a first condition.

Fig. 7a is a view similar to Fig. 7, showing the linear actuator in a second condition.

Fig. 8 is an exploded isometric view of a torque input assembly of a linear actuator assembly of the present invention.

Fig. 9 is a front plan view of a portion of the torque input assembly of Fig. 8.

Fig. 10 is a side exploded elevation view of the torque input assembly of Fig. 8.

Fig. 11 is an isometric view of the torque input assembly of Fig. 8 with the input member engaged.

Fig. 12 is an isometric view of the torque input assembly of Fig. 8 with the input member disengaged.

Fig. 13 is an isometric view of a linear actuator assembly that does not form part of the present invention.

Fig. 14 is a partially exploded isometric view of the linear actuator assembly of Fig. 13.

Fig. 15 is a sectional view along the line 15-15 in Fig. 13, showing the linear actuator in a first condition.

Fig. 16 is a sectional view similar to Fig. 15, showing the linear actuator in a second condition.

Fig. 17 is a sectional view of a linear actuator assembly that does not form part of the present invention.

### DETAILED DESCRIPTION OF THE PREFERRED EMBODIMENTS

The present invention will be described with reference to the accompanying drawing figures wherein like numbers represent like elements throughout. Certain terminology, for example, "top", "bottom", "right", "left", "front", "frontward", "forward", "back", "rear" and "rearward", is used in the following description for relative descriptive clarity only and is not intended to be limiting. Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

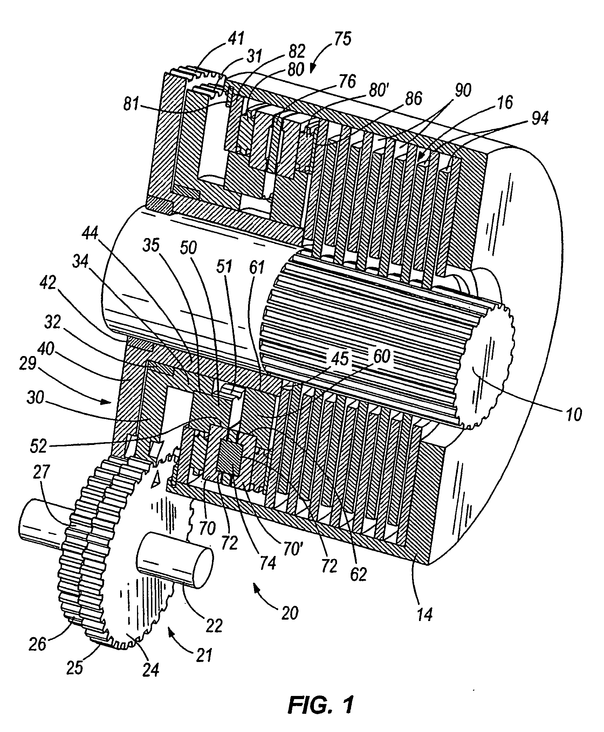

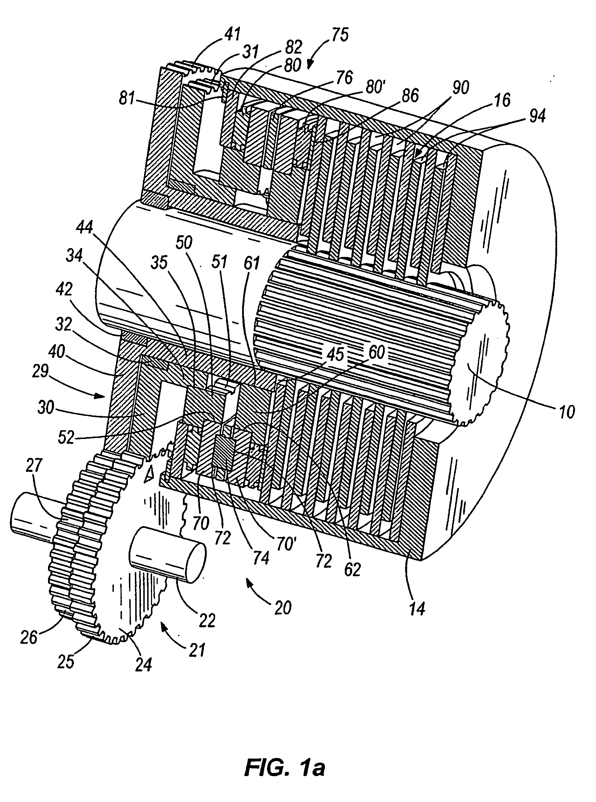

Referring to Figs. 1-4, a linear actuator assembly 20 in accordance with a first embodiment of the present invention will be described. The linear actuator assembly 20 generally comprises a torque input assembly 21, a torque multiplier assembly 29 and a rotary to linear motion actuator 75. The linear actuator assembly 20 is shown supported upon a shaft 10 positioned within a housing 14, that in the illustrated embodiment is a clutch can for a clutch pack 16 or the like. The illustrated linear actuator assembly 20 is positioned to activate the clutch pack 16, and in the illustrated embodiment, is positioned within the clutch can 14. The clutch pack 16 can have various configurations as known in the art for use in various applications, for example, in transfer cases, torque on demand systems, vehicle stability systems, power transmission couplings, locking and limited slip differentials, other non-automotive applications and other non-vehicular applications. While the linear actuator assembly 20 is illustrated in conjunction with a clutch pack 16, it may be used in other applications requiring axial actuation.

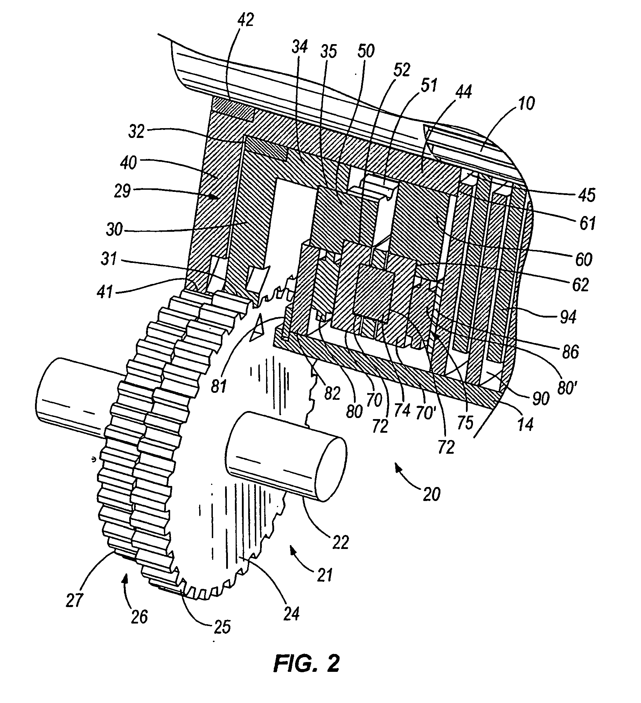

Referring to Figs. 1, 1a, and 2, the torque input assembly 21 generally includes a pair of input gears 24 and 26 positioned for rotation on an input pinion 22. The input pinion 22 may be rotated by various means, for example, an electric motor, a hydraulic motor, or the like. The input pinion 22 rotates both input gears 24, 26 at the same speed Wᵢₙ with a given input torque Tᵢₙ. Each input gear 24, 26 has a plurality of outwardly extending teeth 25 and 27, respectively. In the illustrated embodiment, input gear 24 has a larger diameter and a corresponding greater number N₁ of teeth 25 than the number N₂ of teeth 27 on the smaller diameter input gear 26. The sizing may also be reversed.

The torque input assembly 21 is configured to directly engage the torque multiplier assembly 29 that generally includes first and second intermediate gears 30, 40 and associated first and second pilot rings 50, 60. The larger input gear 24 is aligned with and configured to engage a first, smaller intermediate gear 30 having a number N₃ of teeth 31 and the smaller input gear 26 is aligned with and configured to engage a second, larger intermediate gear 40 having a number N₄ of teeth 41. The number of teeth N₄ is larger than the number of teeth N₃. Due to the different sizes and number of teeth of the input gears 24 and 26 and the corresponding intermediate gears 30 and 40, the intermediate gears 30, 40 will rotate at different speeds. The first intermediate gear 30 rotates at a speed W₁ₛₜ equal to the ratio of N₁ to N₃ times the input speed Wᵢₙ. The second intermediate gear 40 rotates at a speed W_{2nd} equal to the ratio of N₂ to N₄ times the input speed Wᵢₙ. Since N₁ is greater than N₂ and N₄ is greater than N₃, the speed W₁ₛₜ of the first intermediate gear 30 must be greater than the speed W_{2nd} of the second intermediate gear 40. The size of each gear 24, 26, 30, 40 and the number of teeth are selected such that W₁ₛₜ is close to, but not equal to, W_{2nd}, such that there is a resultant relative motion between the first input gear 30 and the second input gear 40.

The first and second intermediate gears 30, 40 each have an axially extending sleeve 34 and 44, respectively, extending therefrom. The sleeves 34, 44 are configured such that the first intermediate gear 30 and sleeve 34 are positioned about and rotate about the sleeve 44. A radial bearing 32 is preferably positioned between the intermediate gear 30 and the sleeve 44 to facilitate such rotation. The second intermediate gear 40 in turn is supported for rotation about the shaft by a radial bearing 42. The extended end of sleeve 34 has a series of outwardly extending teeth 35. The sleeve 44 extends beyond the sleeve 34 and also has a series of outwardly extending teeth 45 at its end.

A first pilot ring 50 has an inner surface with a series of teeth 51 configured to engage the teeth 35 of the first intermediate gear 30 such that the first pilot ring rotates with the first intermediate gear sleeve 34. The interengaging teeth 35, 51 cause the first pilot ring 50 to rotate at a speed equal to W₁ₛₜ. A second pilot ring 60 has an inner surface with a series of teeth 61 configured to engage the teeth 45 of the second intermediate gear 40 such that the second pilot ring rotates with the second intermediate gear sleeve 44. The interengaging teeth 45, 61 cause the second pilot ring 60 to rotate at a speed equal to W_{2nd}. As a result, the first pilot ring 50 rotates relative to the second pilot ring 60 in the same manner as the first and second intermediate gears 30 and 40.

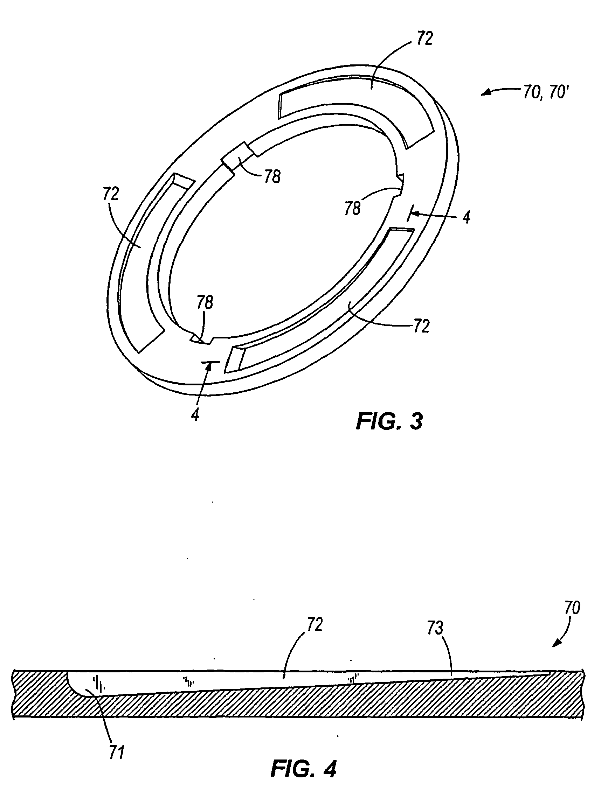

The torque multiplier assembly 29 is configured to engage and actuate the linear actuator 75 as herein described. The linear actuator 75 is a ramp drive. The first pilot ring 50 defines an outward shoulder 52 configured to receive and support a ramp plate 70. The second pilot ring 60 also defines an outward shoulder 62 configured to receive and support a second ramp plate 70'. The pilot ring shoulders 52 and 62 are positioned such that the ramp plates 70 and 70' are positioned opposed to one another. As shown in Fig. 3, each ramp plate 70, 70' preferably has a plurality of recesses 78 or the like configured to engage protrusions (not shown) in the respective shoulder 52, 63 such that the ramp plates 70, 70' rotate with the pilot rings 50, 60. Of course, other configurations can be substituted for coupling the ramp plates 70, 70' to the pilot rings 50, 60. Since the pilot rings 50, 60 rotate at different speeds, W₁ₛₜ, and W_{2nd}, respectively, the opposed ramp plates 70 and 70' also rotate at different speeds and therefore, rotate relative to one another. While the preferred embodiment has two opposed ramped plates 70, 70', the ramp actuator 75 may have more or fewer than two plates and one or more of the plates may be provided without ramps.

An illustrative ramped plate 70, 70' is shown in Figs. 3 and 4. The plates 70 and 70' are preferably the same as one another, but may have different configurations. Each plate 70, 70' has a plurality of ramps 72 defined on a surface therein. The opposed plates 70, 70' are positioned with the ramped surfaces facing one another with rolling elements 74 positioned between the plates 70, 70' in the ramps 72. The rolling elements 74 may be supported by a cage 76 or the like. Each ramp 72 extends from a deep area 71 to a shallow area 73. The ramps 72 may have varying contours between the deep area 71 and the shallow area 73. While the ramp plate 70, 70' is shown with three ramps 72, more or fewer ramps 72 may be provided. Alternatively, each ramp plate 70, 70' may be provided with only a single ramp, with the opposed ramps ascending in opposite directions such that rolling elements positioned therebetween travel along the continuous, opposed ramps. Furthermore, the rolling elements may be eliminated such that the opposed ramp surfaces simply slide relative to one another.

As explained above, the ramp plates 70 and 70' rotate at different speeds, W₁ₛₜ and W_{2nd}, such that there is relative rotation between the ramp plates 70 and 70'. The speed of relative rotation Wᵣₐₘₚ is the absolute value of W₁ₛₜ minus W_{2nd}. The relative rotation causes the rolling elements 74 to rotate and ride up the ramps 72. As the rolling elements 74 move from the deep areas 71 to the shallow areas 73, the opposed plates 70, 70' are forced apart, causing relative axial movement between the plates 70, 70' (see Fig. 1a). Since Wᵣₐₘₚ is less than Wᵢₙ, the torque of the ramp Tᵣₐₘₚ is conversely greater than the input torque Tᵢₙ. The torque multiplication created by the torque multiplier assembly 29 reduces the input torque Tᵢₙ necessary to achieve linear actuation as compared to a linear actuator having only one rotating component and one mating stationary component.

A thrust washer 82 that is prevented from axial movement by a snap ring 81 or the like contains the axial movement of one of the ramp plates 70. A thrust bearing 80 is preferably positioned between the thrust washer 82 and the ramp plate 70. A thrust bearing 80' and thrust washer 86 are positioned on the opposite side of the ramp plate 70', however, the thrust washer 86 is not axially contained and instead is configured to move axially to engage the clutch pack 16 in the manner shown in Fig. 1a. More specifically, in the illustrated embodiment, axial movement of the washer 86 shifts a plurality of clutch plates 90 coupled to the inside of the clutch can 14 axially into engagement with a plurality of clutch plates 94 that are mounted on the shaft 10 for rotation (e.g., via a splined engagement). With this engagement, the clutch can 14 is interlocked to the shaft 10 for rotation therewith. While the ramp actuator 75 is illustrated as being housed within the clutch can 14, it is also possible for the ramp actuator 75 to be positioned outside of the clutch can 14. However, by positioning the actuator 75 within the clutch can 14, the thrust forces inside the transmission system can be reduced, resulting in the ability to use smaller thrust bearings elsewhere in the system.

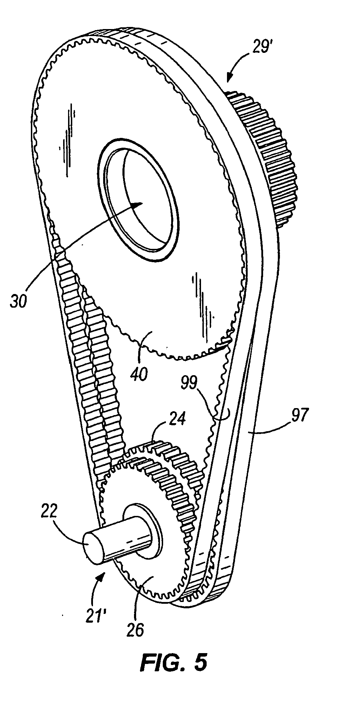

Referring to Fig. 5, a torque input assembly 21' and torque multiplier assembly 29' that are part of a linear actuator assembly that is a second embodiment of the present invention are shown. The torque input assembly 21' includes input gears 24 and 26 positioned for rotation on an input pinion 22. The input gears 24,26 are configured to rotate intermediate gears 30, 40 and associated first and second pilot rings (not shown) of the torque multiplier assembly 29'. The input gears 24, 26 and intermediate gears 30, 40 again have different sizes and number of teeth such that the intermediate gears 30, 40 rotate at different speeds. The present embodiment differs from the first embodiment in that the input gears 24, 26 do not directly engage the respective intermediate gears 30, 40. Instead a first drive belt 97 extends about the first input gear 24 and first intermediate gear 30 such that rotation of the first input gear 24 causes rotation of the first intermediate gear 30 and a second drive belt 99 extends about the second input gear 26 and second intermediate gear 40 such that rotation of the second input gear 26 causes rotation of the second intermediate gear 40. The linear actuator assembly of the second embodiment otherwise functions as in the first embodiment.

The torque input assembly 21' and torque multiplier assembly 29' illustrate that the torque input assembly and torque multiplier assembly may have various configurations. For example, instead of the illustrated spur gears, the assemblies may have helical gears or bevel gears, for example, to change the angle of motion. The gear assemblies alternatively may include a planetary gear assembly. Additionally, the torque input and torque multiplier may utilize a power screw, for example a ball screw or an acme type screw. The gear assemblies may alternatively be replaced by a harmonic drive assembly or a traction drive assembly. The torque input assembly and torque multiplier assembly may have various configurations to receive an input torque and deliver an increased torque to the ramp actuator.

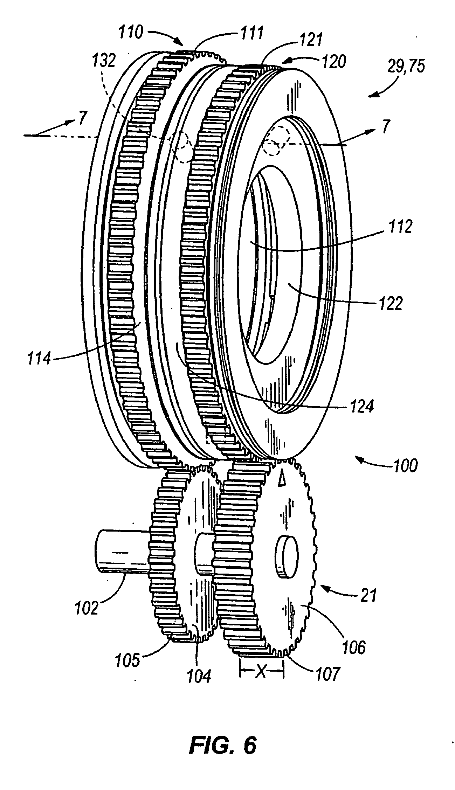

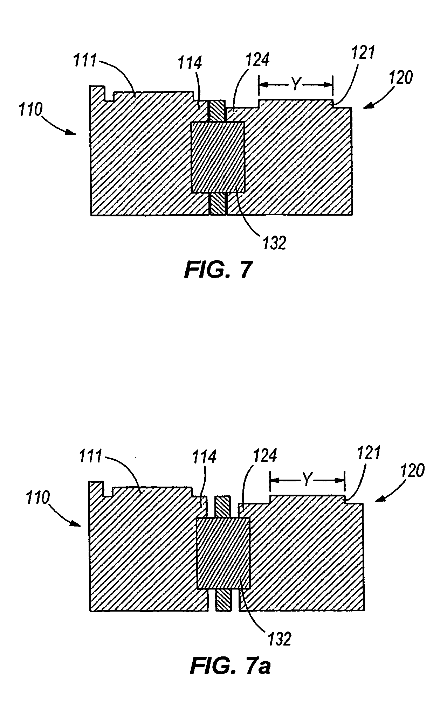

Referring to Figs. 6, 7, and 7a, a linear actuator assembly 100 that is a third embodiment of the present invention is shown. The linear actuator assembly 100 is similar to the first embodiment and includes input gears 104 and 106 configured to drive ramp plates 110 and 120 at different speeds to cause relative rotation therebetween. The input gears 104, 106 are positioned for rotation on an input pinion 102. The input pinion 102 rotates both input gears 104, 106 at the same speed Wᵢₙ₂ with a given input torque Tᵢₙ₂. Each input gear 104, 106 has a plurality of outwardly extending teeth 105 and 107, respectively. In the illustrated embodiment, input gear 104 has a smaller diameter and a corresponding fewer number N₁₋₂ of teeth 105 than the number N₂₋₂ of teeth 107 on the larger diameter input gear 106. The sizing may also be reversed.

In the present embodiment, the torque multiplier assembly is formed integral with the linear actuator as described herein. Each ramp plate 110 and 120 is formed with an integral series of teeth 111, 121, respectively, forming gear portions, and an integral ramp surface 114, 124, respectively. The ramp surfaces 114, 124 are similar in construction to the ramped surfaces of the ramped plates 70, 70' illustrated in Figs. 3 and 4, but could also take on various other configurations having fewer or more ramps and/or ramps having different contours. The first ramp plate 110 is configured to be aligned with the smaller input gear 104 and is therefore larger than and has more teeth N₃₋₂ than the number of teeth N₄₋₂ of the second, smaller ramp plate 120. Due to the different sizes and number of teeth of the input gears 104 and 106 and the corresponding ramp plates 110 and 120, the ramp plates 110 and 120, and thereby the corresponding ramp surfaces 114 and 124, will rotate at different speeds. As such, the rolling elements 132 between the ramp surfaces 114, 124 will be caused to roll along the ramped surfaces to move the ramp plates 110 and 120 axially relative to one another (see Figs. 7 and 7a). To support the axial movement, the input gear teeth 107 preferably have a width X (see Fig. 6) greater than the width Y (see Figs. 7 and 7a) of the ramp plate teeth 121.

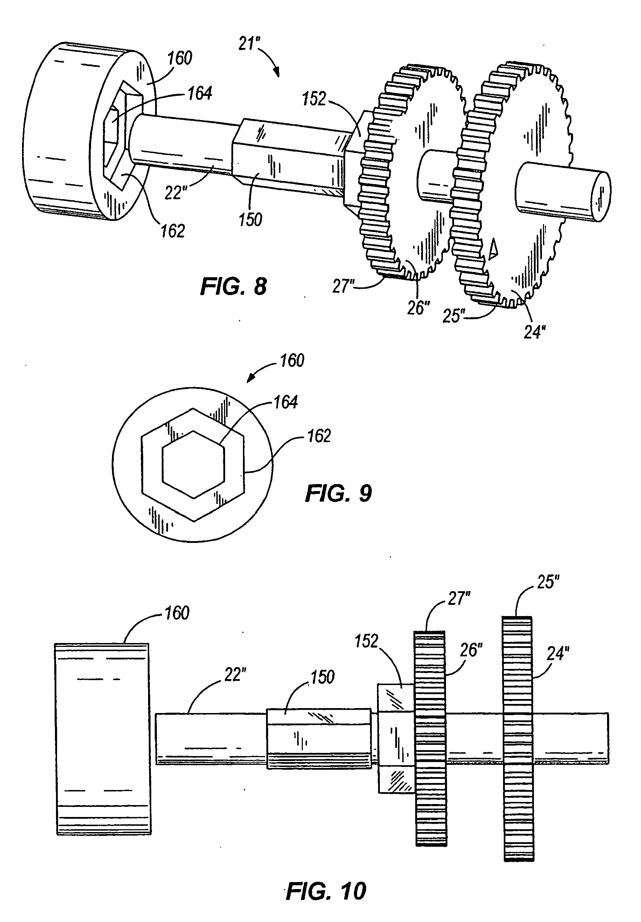

Referring to Figs. 8-12, a torque input assembly 21" of a linear actuator assembly will be described. The torque input assembly 21" includes an input pinion shaft 22" driven by an electric or hydraulic motor or the like. A first input gear 24" is fixedly attached to the shaft 22" such that the gear 24" rotates with the shaft 22". A second input gear 26" is positioned on the shaft 22", but is free to rotate thereabout. The first and second input gears 24" and 26" are different sizes and have different numbers of teeth 25" and 27" respectively as in the first embodiment.

The shaft 22" is provided with a keyed portion 150, for example, a raised hexagonal portion. The second input gear 26" also has a keyed portion 152, for example, a hexagonal block, extending therefrom adjacent the shaft keyed portion 150. The keyed portions 150 and 152 are of different configurations such that each may be engaged independently by an input coupling 160. As shown in Figs. 8 and 9, the input coupling 160 has a shallow hexagonal opening 162 configured to engage the gear keyed portion 152 and a deep hexagonal opening 164 configured to engage the shaft keyed portion 150.

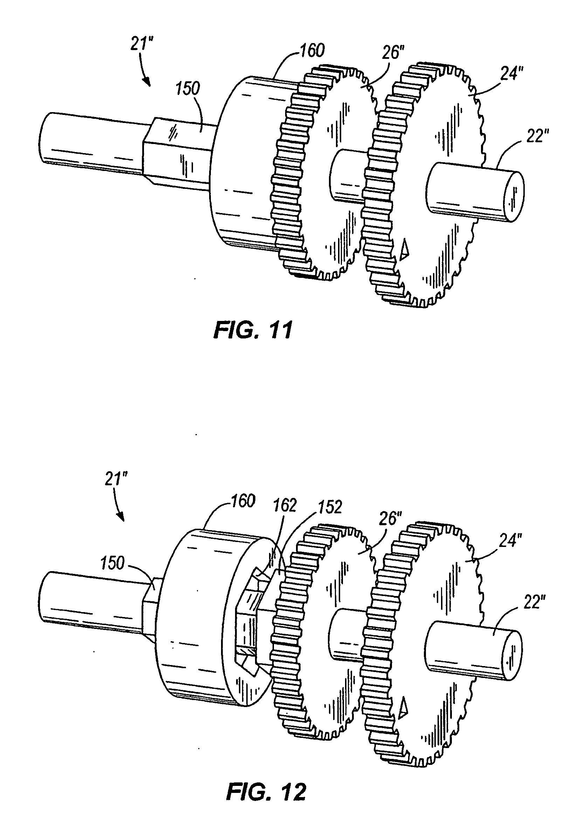

Referring to Figs. 11 and 12, operation of the torque input assembly 21" will be described. The input coupling 160 is positioned on the input pinion shaft 22" with the shaft keyed portion 150 engaging the coupling opening 164 such that the input coupling rotates with the pinion shaft 22". The input coupling 160 is movable between a first position (see Fig. 11), wherein the gear keyed portion 152 is received in the coupling opening 162 such that the second input gear 26" rotates with the pinion shaft 22", and a second position (see Fig. 12), wherein the coupling 160 is clear of the gear keyed portion 152 such that the second input gear 26" is free to rotate independently of the input pinion shaft 22". The input coupling 160 is preferably configured such that when the motor is operating, the input coupling 160 automatically is in the engaged position shown in Fig. 11, but when the motor power fails or the motor is otherwise stopped, the input coupling 160 automatically moves to the disengaged position shown in Fig. 12. As such, when the motor is operating, the input coupling 160 causes the second input gear 26" to rotate at the input speed and the linear actuator assembly operates as described in conjunction with the first embodiment. However, when the motor is stopped, the input coupling 160 moves to the disengaged position and the second input gear 26" is free to rotate. As such, the linear actuator (not shown) will back drive the gear system, thereby allowing the linear actuator assembly to automatically disengage when the power fails. Other configurations, for example, an actuator pin, centrifugal clutch, or bendix device, may be utilized to facilitate the back driving of the gear system.

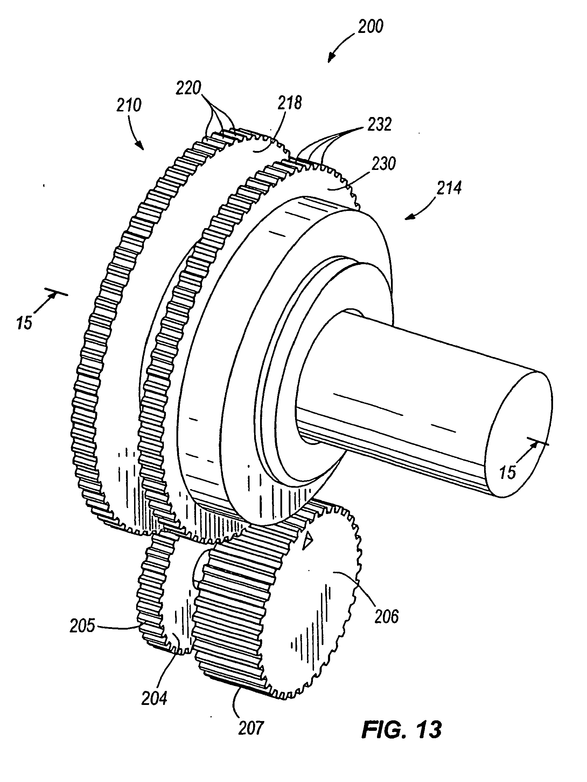

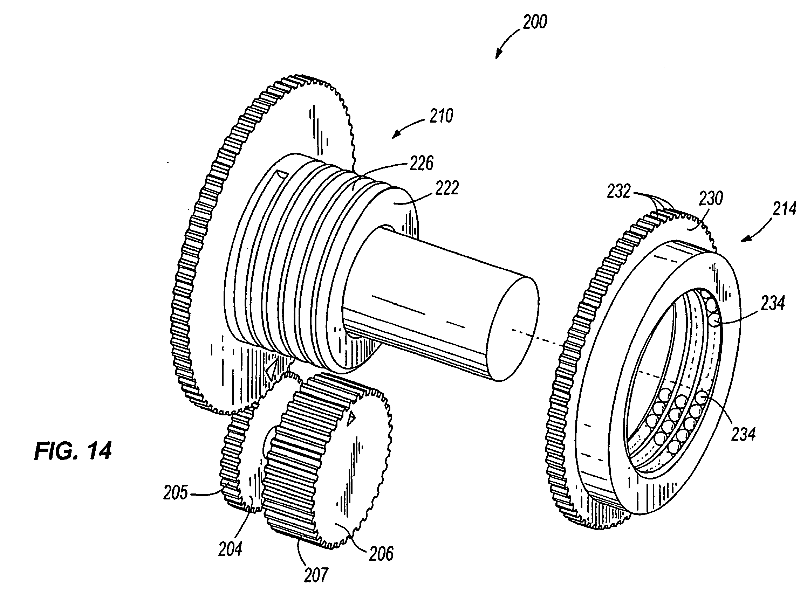

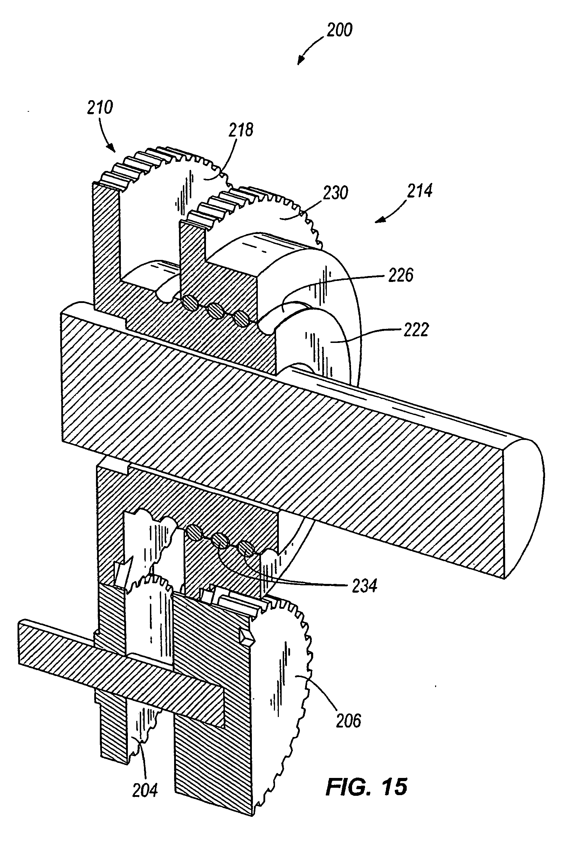

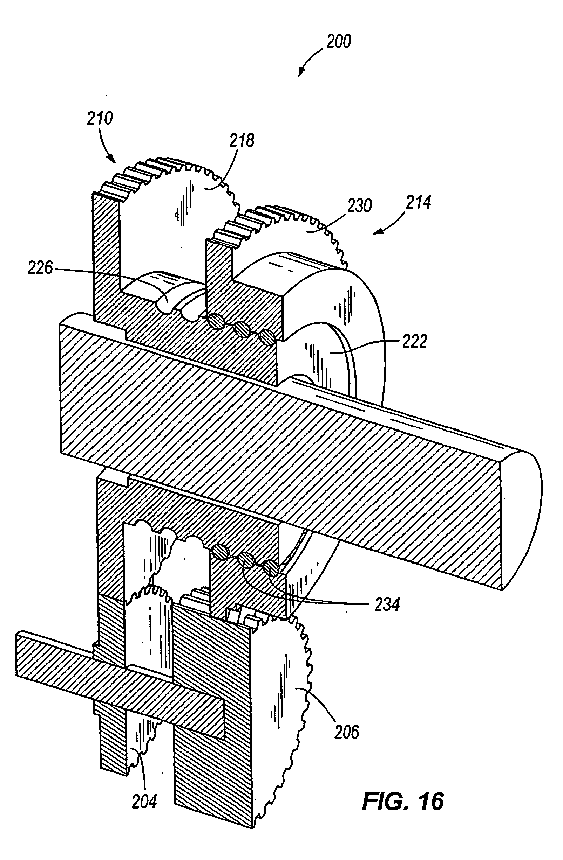

Figs. 13-16 illustrate a linear actuator assembly 200. The assembly shown in Figs. 13-16 is somewhat similar to the third embodiment shown in Fig. 6 and includes input gears 204 and 206. However, instead of driving ramp plates, the input gears 204, 206 are configured to drive a ballscrew 210 and a nut 214, respectively. The ballscrew 210 includes a toothed or gear portion 218 having teeth 220 that engage with the teeth 205 of the input gear 204, and a threaded portion 222 (see Fig. 14) containing a thread groove 226. The nut 214 includes a toothed or gear portion 230 having teeth 232 that engage with the teeth 207 of the input gear 206. The nut 214 retains a plurality of rolling elements in the form of balls 234 configured to ride in the thread groove 226 of the ballscrew 210, as is understood in the art. Relative rotation of the ballscrew 210 and the nut 214 causes the nut 214 to move axially along the threaded portion 222 of the ballscrew 210 (see Figs. 15 and 16). The axial movement of the nut 214 causes the engagement of the clutch pack 16 or other engagements depending on the particular application.

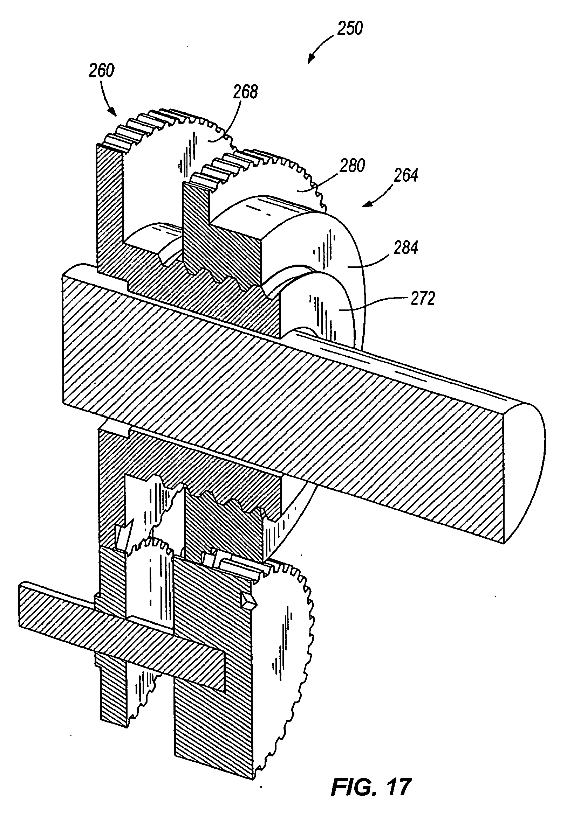

Fig. 17 illustrates a linear actuator assembly 250. The actuator assembly 250 is similar to the actuator assembly 200 except that the ballscrew configuration is replaced by an acme screw configuration. The acme screw 260 includes a toothed or gear portion 268 and a threaded portion 272. The nut 264 includes a toothed or gear portion 280 and a threaded portion 284 configured to engage with the threaded portion 272 such that relative rotation of the acme screw 260 and the nut 264 causes the nut 264 to move axially along the threaded portion 272 of the acme screw 260. The axial movement of the nut 264 causes the engagement of the clutch pack 16 or other engagements depending on the particular application.

Each of the various embodiments discussed above can be used for engagement of the clutch pack 16 or for other applications. Additionally, the embodiments discussed above can be housed within the clutch can 14, or alternatively, can be used outside of the clutch can 14, or in applications that do not include any clutch can 14 at all. Furthermore, components of various embodiments (e.g., the torque input assemblies, the torque multiplier assemblies, and the linear actuators) can be interchanged as desired to achieve variations of the embodiments illustrated in the figures.

Various features of the invention are set forth in the following claims.

## Claims

1. A linear actuator assembly (20) for providing an axial force, the assembly comprising:
a linear actuator (75) including first and second rotatable components (70, 70'), the components configured for relative axial movement;
a torque input assembly (21) configured to provide an input torque and an input speed; and
a torque multiplier assembly (29) engaging the torque input assembly (21) and the linear actuator (75) and configured such that the first and second components (70, 70') are rotated at different speeds thereby causing relative rotation between the first and second components (70, 70'), the relative rotation causing the first and second components (70, 70') to move axially relative to one another;
**characterised in that** the first and second components (70, 70') include a pair of opposed plates with at least one of the plates having a ramped surface.

2. The linear actuator assembly of claim 1 further including at least one rolling element (74) positioned between the opposed plates.

3. The linear actuator assembly of claim 1, wherein the torque input assembly (21) includes first and second gears (24, 26) rotating on a single input pinion (22), the first gear having a first series of gear teeth configured to drive rotation of the first component of the linear actuator, the second gear having a second series of gear teeth configured to drive rotation of the second component of the linear actuator, the first series of gear teeth having a different number of teeth than the second series of gear teeth such that the first and second components rotate at different speeds.

4. The linear actuator of claim 3, wherein one of the first and second gears (24, 26) can be disengaged from rotation with the input pinion (22).

5. The linear actuator of claim 3, wherein the torque multiplier assembly (29) includes;
a third gear coupled to the first gear to be driven by rotation of the first gear; and
a fourth gear coupled to the second gear to be driven by rotation of the second gear.

6. The linear actuator of claim 5, wherein the first component of the linear actuator (75) is coupled to the third gear and the second component of the linear actuator is coupled to the fourth gear.

7. The linear actuator of claim 6, wherein the first and second components (70, 70') include a first plate coupled to the third gear and second plate coupled to the fourth gear, with at least one of the plates having the ramped surface.

8. The linear actuator of claim 7, wherein the first plate and the third gear are integrally formed, and wherein the second plate and the fourth gear are integrally formed.

9. The linear actuator of claim 5, wherein the first and third gears are coupled together by direct engagement with respective teeth of the first and third gears, and wherein the second and fourth gears are coupled together by direct engagement with respective teeth of the second and fourth gears.

10. The linear actuator of claim 5, wherein the first and third gears are coupled together by a first belt, and wherein the second and fourth gears are coupled together by second belt.

11. The linear actuator of claim 1 configured for actuating a clutch pack (16), the linear actuator (75) being positioned inside a clutch can.

12. A method of creating an axial force in a linear actuator (75) including first and second rotatable components (70, 70'), the method comprising:
providing a single input torque to a torque multiplier assembly (29) coupled with the first and second rotatable components (70, 70'), and
rotating the first component at a first speed and rotating the second component at a second speed different from the first speed, thereby causing relative rotation between the first and second components (70, 70'), the relative rotation causing the first and second components (70, 70') to spread apart axially;
**characterised in that** first and second components (70, 70') are opposed plates with at least one of the plates having a ramped surface, and wherein rotating the first component and the second component at different speeds includes rotating the plates at different speeds.

13. The method of claim 12, wherein providing the single input torque includes rotating a single input pinion (22) having first and second gears (24, 26) mounted thereon.

14. The method of claim 13, further comprising selectively disengaging one of the first and second gears (24, 26) from the input pinion (22) to back drive the torque multiplier assembly (29) and move the first and second components (70, 70') axially together.

15. The method of claim 12, wherein providing the single input torque (22) to the torque multiplier assembly (29) includes driving a first gear of the torque multiplier and driving a second gear of the torque multiplier.

16. The method of claim 15, wherein the first gear of the torque multiplier assembly (29) is coupled to the first component and the second gear of the torque multiplier assembly (29) is coupled to the second component such that driving the first and second gears of the torque multiplier assembly (29) rotates the first and second components (70, 70').

17. The method of claim 12, wherein a rolling elements (74) positioned between the opposed plates at the ramped surface, and wherein rotating the plates at different speeds causes the rolling element to move along the ramped surface and cause axial spreading of the plates.

## Patentansprüche

1. Lineare Antriebsanordnung (20) zum Bereitstellen einer Axialkraft, wobei die Anordnung aufweist:
- eine lineare Antriebseinrichtung (75) mit ersten und zweiten drehbaren Komponenten (70, 70'), wobei die Komponenten für eine relative axiale Bewegung ausgelegt sind;
- eine Drehmomenteingangsanordnung (21), die dafür ausgelegt ist, ein Eingangsdrehmoment und eine Eingangsgeschwindigkeit bereitzustellen; und
- eine Drehmomentvervielfacheranordnung (29), die die Drehmomenteingangsanordnung (21) und die lineare Antriebseinrichtung (75) ergreift und die derart ausgelegt ist, dass die ersten und zweiten Komponenten (70, 70') mit unterschiedlichen Geschwindigkeiten gedreht werden, wodurch eine relative Drehung zwischen den ersten und zweiten Komponenten (70, 70') bewirkt wird, wobei die relative Drehung bewirkt, dass die ersten und zweiten Komponenten (70, 70') sich axial relativ zueinander bewegen;
**dadurch gekennzeichnet, dass** die ersten und zweiten Komponenten (70, 70') ein Paar sich gegenüberliegender Platten aufweisen, wobei mindestens eine der Platten eine rampenförmige Oberfläche aufweist.

2. Lineare Antriebsanordnung nach Anspruch 1, wobei sie des weiteren mindestens ein zwischen den sich gegenüberliegenden Platten angeordnetes Wälzelement (74) aufweist.

3. Lineare Antriebsanordnung nach Anspruch 1, wobei die Drehmomenteingangsanordnung (21) erste und zweite Getriebeorgane (24, 26) aufweist, die sich auf einem einzigen Eingangsritzel (22) drehen, wobei das erste Getriebeorgan eine erste Serie von Getriebezähnen aufweist, die dafür ausgelegt sind, die Drehung der ersten Komponente der linearen Antriebseinrichtung anzutreiben, wobei das zweite Getriebeorgan eine zweite Serie von Getriebezähnen aufweist, die dafür ausgelegt sind, die Drehung der zweiten Komponente der linearen Antriebseinrichtung anzutreiben, wobei die erste Serie der Getriebezähne eine andere Anzahl von Zähnen aufweist als die zweite Serie der Getriebezähne, so dass sich die ersten und zweiten Komponenten mit unterschiedlichen Geschwindigkeiten drehen.

4. Lineare Antriebseinrichtung nach Anspruch 3, wobei eines der ersten und zweiten Getriebeorgane (24, 26) von einer Drehung mit dem Eingangsritzel entkoppelt werden kann.

5. Lineare Antriebseinrichtung nach Anspruch 3, wobei die Drehmomentvervielfacheranordnung (29) ein mit dem ersten Getriebeorgan gekoppeltes drittes Getriebeorgan aufweist, um durch eine Drehung des ersten Getriebeorgans angetrieben zu werden; und wobei sie ein mit dem zweiten Getriebeorgan gekoppeltes viertes Getriebeorgan aufweist, um durch eine Drehung des zweiten Getriebeorgans angetrieben zu werden.

6. Lineare Antriebseinrichtung nach Anspruch 5, wobei die erste Komponente der linearen Antriebseinrichtung (75) mit dem dritten Getriebeorgan gekoppelt ist und die zweite Komponente der linearen Antriebseinrichtung mit dem vierten Getriebeorgan gekoppelt ist.

7. Lineare Antriebseinrichtung nach Anspruch 6, wobei die ersten und zweiten Komponenten (70, 70') eine mit dem dritten Getriebeorgan gekoppelte erste Platte und eine mit dem vierten Getriebeorgan gekoppelte zweite Platte aufweisen, wobei mindestens eine der Platten die rampenförmige Oberfläche aufweist.

8. Lineare Antriebseinrichtung nach Anspruch 7, wobei die erste Platte und das dritte Getriebeorgan einstückig ausgebildet sind und wobei die zweite Platte und das vierte Getriebeorgan einstückig ausgebildet sind.

9. Lineare Antriebseinrichtung nach Anspruch 5, wobei die ersten und dritten Getriebeorgane durch einen direkten Eingriff mit entsprechenden Zähnen der ersten und dritten Getriebeorgane miteinander gekoppelt sind, und wobei die zweiten und vierten Getriebeorgane durch einen direkten Eingriff mit entsprechenden Zähnen der zweiten und vierten Getriebeorganen miteinander gekoppelt sind.

10. Lineare Antriebseinrichtung nach Anspruch 5, wobei die ersten und dritten Getriebeorgane über einen ersten Riemen miteinander gekoppelt sind und wobei die zweiten und vierten Getriebeorgane über einen zweiten Riemen miteinander gekoppelt sind.

11. Lineare Antriebseinrichtung nach Anspruch 1, die dafür ausgelegt ist, einen Kupplungssatz (16) zu betätigen, wobei die lineare Antriebseinrichtung (75) innerhalb einer Kupplungshülse angeordnet ist.

12. Verfahren zum Erzeugen einer Axialkraft in einer linearen Antriebseinrichtung (75), die erste und zweite drehbare Komponenten (70, 70') aufweist, wobei das Verfahren umfasst:
- Bereitstellen eines einzigen Eingangsdrehmoments an eine Drehmomentvervielfacheranordnung (29), die mit den ersten und zweiten drehbaren Komponenten (70, 70') gekoppelt ist; und
- Drehen der ersten Komponente bei einer ersten Geschwindigkeit und Drehen der zweiten Komponente bei einer zweiten Geschwindigkeit, die sich von der ersten Geschwindigkeit unterscheidet, wodurch eine relative Drehung zwischen den ersten und zweiten Komponenten (70, 70') bewirkt wird, wobei die relative Drehung bewirkt, dass sich die ersten und zweiten Komponenten (70, 70') axial auseinander bewegen;
**dadurch gekennzeichnet, dass** die ersten und zweiten Komponenten (70, 70') sich gegenüberliegende Platten sind, wobei mindestens eine der Platten eine rampenförmige Oberfläche aufweist, und wobei eine Drehen der ersten Komponente und der zweiten Komponente bei unterschiedlichen Geschwindigkeiten ein Drehen der Platten bei unterschiedlichen Geschwindigkeiten umfasst.

13. Verfahren nach Anspruch 12, wobei das Bereitstellen des einzigen Eingangsdrehmoments ein Drehen eines einzigen Eingangsritzels (22) umfasst, auf dem erste und zweite Getriebeorgane (24, 26) angebracht sind.

14. Verfahren nach Anspruch 13, wobei es des weiteren ein wahlweises Entkoppeln eines der ersten und zweiten Getriebeorgane (24, 26) von dem Eingangsritzel (22) umfasst, um die Drehmomentvervielfacheranordnung (29) zurück zu führen und die ersten und zweiten Komponenten (70, 70') axial zusammen zu bewegen.

15. Verfahren nach Anspruch 12, wobei das Bereitstellen des einzigen Eingangsdrehmoments (22) an die Drehmomentvervielfacheranordnung (29) ein Antreiben eines ersten Getriebeorgans des Drehmomentvervielfachers und ein Antreiben eines zweiten Getriebeorgans des Drehmomentvervielfachers umfasst.

16. Verfahren nach Anspruch 15, wobei das erste Getriebeorgan der Drehmomentvervielfacheranordnung (29) mit der ersten Komponente gekoppelt ist und das zweite Getriebeorgan der Drehmomentvervielfacheranordnung (29) mit der zweiten Komponente gekoppelt ist, so dass ein Antreiben der ersten und zweiten Getriebeorgane der Drehmomentvervielfacheranordnung (29) die ersten und zweiten Komponenten (70, 70') dreht.

17. Verfahren nach Anspruch 12, wobei ein Wälzelement (74) zwischen den sich gegenüberliegenden Platten an der rampenförmigen Oberfläche angeordnet ist, und wobei ein Drehen der Platten mit unterschiedlichen Geschwindigkeiten das Wälzelement dazu veranlasst, sich entlang der rampenförmigen Oberfläche zu bewegen und ein axiales Ausbreiten der Platten zu bewirken.

## Revendications

1. Ensemble actionneur linéaire (20) pour fournir une force axiale, l'ensemble comportant :
un actionneur linéaire (75) comprenant de premier et second composants rotatifs (70, 70'), les composants étant configurés pour un mouvement axial relatif ;
un ensemble d'entrée de couple (21) configuré pour fournir un couple d'entrée et une vitesse d'entrée ; et
un ensemble multiplicateur de couple (29) mettant en prise l'ensemble d'entrée de couple (21) et l'actionneur linéaire (75) et étant configuré de manière à ce que les premier et second composants (70, 70') sont tournés à vitesses différentes causant de la sorte une rotation relative entre les premier et second composants (70, 70'), la rotation relative causant les premier et second composants (70, 70') à se déplacer en sens axial l'un par rapport à l' autre ;
**caractérisé en ce que** les premier et second composants (70, 70') comprennent une paire de plateaux opposés dont au moins un des plateaux présente une surface en rampe.

2. Ensemble actionneur linéaire selon la revendication 1, comprenant par ailleurs au moins un élément de roulement (74) positionné entre les plateaux opposés.

3. Ensemble actionneur linéaire selon la revendication 1, dans lequel l'ensemble d'entrée de couple (21) comprend une première et une seconde roue dentée (24, 26) tournant sur un seul pignon d'entrée (22), la première roue dentée présentant une première série de dents d'engrenage configurée pour entraîner la rotation du premier composant de l'actionneur linéaire, la seconde roue dentée présentant une seconde série de dents d'engrenage configurée pour entraîner la rotation du second composant de l'actionneur linéaire, la première série de dents d'engrenage présentant un nombre différent de dents de la seconde série de dents d'engrenage de sorte que les premier et second composants tournent à vitesses différentes.

4. Actionneur linéaire selon la revendication 3, dans lequel une des première et seconde roues dentées (24, 26) peut être dégagée de la rotation avec le pignon d'entrée (22).

5. Actionneur linéaire selon la revendication 3, dans lequel l'ensemble multiplicateur de couple (29) comprend : une troisième roue dentée couplée à la première roue dentée qui peut être entraînée par rotation de la première roue dentée ; et une quatrième roue dentée couplée à la seconde roue dentée qui peut être entraînée par rotation de la seconde roue dentée.

6. Actionneur linéaire selon la revendication 5, dans lequel le premier composant de l'actionneur linéaire (75) est couplé à la troisième roue dentée et le second composant de l'actionneur linéaire est couplé à la quatrième roue dentée.

7. Actionneur linéaire selon la revendication 6, dans lequel les premier et second composants (70, 70') comprennent un premier plateau couplé à la troisième roue dentée et un second plateau couplé à la quatrième roue dentée, un des plateaux au moins présentant la surface en rampe.

8. Actionneur linéaire selon la revendication 7, dans lequel le premier plateau et la troisième roue dentée forment une partie intégrante et dans lequel le seconde plateau et la quatrième roue dentée forment une partie intégrante.

9. Actionneur linéaire selon la revendication 5, dans lequel la première et la troisième roues dentées sont couplées ensemble par engrenage direct des dents respectives de la première et de la troisième roues dentées et dans lequel la seconde et la quatrième roues dentées sont couplées ensemble par engrenage direct des dents respectives de la seconde et de la quatrième roues dentées.

10. Actionneur linéaire selon la revendication 5, dans lequel les première et troisième roues dentées sont couplées ensemble par une première courroie et dans lequel les seconde et quatrième roues dentées sont couplées ensemble par une seconde courroie.

11. Actionneur linéaire selon la revendication 1, configuré pour actionner un ensemble embrayage (16), l'actionneur linéaire (75) étant positionné à l'intérieur du boîtier d'embrayage.

12. Procédé pour créer une force axiale dans un actionneur linéaire (75) comprenant de premier et second composants rotatifs (70, 70'), le procédé comprenant :
fournir un seul couple d'entrée à un ensemble multiplicateur de couple (29) couplé avec les premier et second composants rotatifs (70, 70'), et
tourner le premier composant à une première vitesse et tourner le second composant à une seconde vitesse différente de la première vitesse, causant ainsi une rotation relative entre les premier et second composants (70, 70'), la rotation relative causant les premier et second composants (70, 70') à s'écarter en sens axial,
**caractérisé en ce que** les premier et second composants (70, 70') sont des plateaux opposés, au moins un des plateaux présentant une surface en rampe, et dans lequel la rotation du premier composant et du second composant à vitesses différentes comprend la rotation des plateaux à vitesses différentes.

13. Procédé selon la revendication 12, dans lequel la fourniture du seul couple d'entrée comprend la rotation d'un seul pignon d'entrée (22) présentant de première et seconde roues dentées (24, 26) montées sur lui.

14. Procédé selon la revendication 13, comprenant par ailleurs le dégagement sélectif d'une des première et seconde roues dentées (24, 26) du pignon d'entrée (22) pour retourner en arrière l'ensemble multiplicateur de couple (29) et déplacer ensemble les premier et second composants (70, 70') en sens axial.

15. Procédé selon la revendication 12, dans lequel la fourniture du seul couple d'entrée (22) à l'ensemble multiplicateur de couple (29) comprend l'entraînement d'une première roue dentée du multiplicateur de couple et l'entraînement d'une seconde roue dentée du multiplicateur de couple.

16. Procédé selon la revendication 15, dans lequel la première roue dentée de l'ensemble multiplicateur de couple (29) est couplée au premier composant et la seconde roue dentée de l'ensemble multiplicateur de couple (29) est couplée au second composant de sorte que l'entraînement des première et seconde roues dentées de l'ensemble multiplicateur de couple (29) tourne les premier et second composants (70, 70').

17. Procédé selon la revendication 12, dans lequel un élément de roulement (74) est positionné entre les plateaux opposés sur la surface en rampe, et dans lequel la rotation des plateaux à vitesses différentes cause l'élément de roulement à se déplacer le long de la surface en rampe et à causer l'écartement axial des plateaux.
